# EUROPEAN PATENT SPECIFICATION

(11) **EP 3 098 567 B1**
(45) Date of publication and mention of the grant of the patent: **27.11.2019**
(21) Application number: 16171748.3
(22) Date of filing: 27.05.2016
(51) Int. Cl.: G01C 21/34, H04W 4/02, G06Q 30/02

(54) **RIDE SHARING NAVIGATION**
FAHRGEMEINSCHAFS NAVIGATION
NAVIGATION POUR COVOITURAGE

(30) Priority: 29.05.2015 US 201514725767
(43) Date of publication of application: 30.11.2016
(73) Proprietor: HERE Global B.V., 5503 LB Veldhoven (NL)
(72) Inventor: FOWE, James Adeyemi, Palatine, IL 60074 (US)
(74) Representative: Potter Clarkson

(56) References cited:
- US-A- 4 360 875
- US-A1- 2008 270 019
- US-A1- 2014 188 775

## Description

### FIELD

The following disclosure relates to the field of routing and navigation systems as applied to ride sharing.

### BACKGROUND

Map data or geographic data is used in computer based systems that provide useful features to users. For example, computer based systems may provide for the identification of routes to destinations or points of interests. A navigation system may determine the optimum route to be taken by the end user to travel from an origin to a destination location using map data stored in a database.

US 4360875 A relates to a flexible-route transportation system, primarily utilizing privately-owned vehicles to provide ridesharing transportation for the public. A central coordinating station matches ride requests with ride offers, each submitted through interactive communication terminals, on a trip-by-trip basis, comparing the driver's indicated origin, destination, seating requirements and time with the rider's requested origin, destination, seat availability and time. If a ride offer and ride request can be matched, the central coordinating station transmits to the driver the rider's identity and location and transmits to the rider the description and identity of the vehicle, so that the driver can pick up and drop off the rider en route to his or her destination.

US 2008/270019 A1 relates to systems and methods for enhancing the convenience, security, and efficiency of ridesharing through the incorporation of trusted communities, geotemporal routing algorithms, and by providing monetary incentives and privacy safeguards to encourage system growth.

US 2014/188775 A1 relates to the determination of the driver of a shared ride. US '775 does this by calculating, for each respective potential driver, values of variables such as carbon emission, driving distance, driving time, vehicle size, fuel efficiency, accident occurrence, or vehicle speed. A potential driver associated with a selected optimal value may be assigned as the driver of the shared ride.

### SUMMARY

A computer-implemented method according to claim 1, a computer program according to claim 13 and an apparatus according to claim 14 are disclosed.
In one embodiment, a method includes receiving a first destination of a first passenger and a route strategy from a first device, wherein the route strategy includes a first rider destination hierarchy for a ride sharing algorithm and a rider destination hierarchy is a rule that dictates how multiple destinations of multiple passengers received from multiple devices are to be ordered along a generated route; receiving a second destination of a second passenger and a second route strategy from a second device, wherein the route strategy includes a second rider destination hierarchy for a ride sharing algorithm, the second destination is different from the first destination and the second route strategy is different from the first route strategy; and generating, using the ride sharing algorithm, a route to the first destination and the second destination, wherein the route is based on the first rider destination hierarchy, the second rider destination hierarchy, or a combination thereof.

The method may comprise
calculating a first estimated time of arrival for the first destination;
calculating a second estimated time of arrival for the second destination;
transmitting the first estimated time of arrival to the first device; and
transmitting the second estimated time of arrival to the second device.

The method may further comprise
receiving traffic data;
calculating a first updated estimated time of arrival for the first destination based on the traffic data;
calculating a second updated estimated time of arrival for the second destination based on the traffic data;
transmitting the first updated estimated time of arrival to the first device; and
transmitting the second updated estimated time of arrival to the second device.

The method may further comprise
receiving traffic data, wherein the traffic data is used to generate the route.

The method may comprise, the first rider destination hierarchy of the first route strategy specifying that the route minimize distance or time for prioritizing the first destination and the second destination.

The method may comprise, the first rider destination hierarchy of the first route strategy specifying that the route prioritizes the first destination prior to the second destination.

The method may further comprise:
receiving a third destination of a third passenger and a third route strategy from a third device; wherein the third route strategy includes a third rider destination hierarchy for the ride sharing algorithm; and
generating, using the ride sharing algorithm, a new route to the first destination, the second destination, and the third destination, wherein the new route is generated based on the rider destination hierarchies specified by the first, second, or third route strategies, or combination thereof.

The method may comprise, the third rider destination hierarchy of the third route strategy specifying that the new route prioritizes the third destination over the second destination and the second destination over the first destination.

The method may further comprise:
receiving traffic data;
generating, using the ride sharing algorithm, one or more alternative routes to the first destination (A), the second destination (B) and the third destination (C), wherein the one or more alternative routes takes into account the traffic data and is based on the rider destination hierarchies specified by the first, second, or third route strategies, or a combination thereof;
transmitting the one or more alternative routes to the first device, second device, and third device as potential replacement routes for the generated route or the generated new route;
receiving one or more acceptances or one or more rejections of the one or more alternative routes from the first device, the second device, or the third device; and
selecting an approved alternative route from the one or more alternative routes based on the one or more acceptances or one or more rejections, and the rider destination hierarchies specified by the first, second, or third route strategy, or combination thereof.

The method may further comprise:
calculating a first estimated time of arrival for the first destination;
calculating a second estimated time of arrival for the second destination;
calculating a third estimated time of arrival for the third destination;
transmitting the first estimated time of arrival to the first device;
transmitting the second estimated time of arrival to the second device; and
transmitting the third estimated time of arrival to the third device.

The method may comprise, receiving one or more acceptances from the first device, the second device, and the third device.

The method may comprise, selecting an approved alternative route comprising:
counting the one or more acceptances for the one or more alternative routes; and
selecting the alternative route which has the highest number of acceptances.

The method may further comprise:
calculating a first fare for the first destination; and
calculating a second fare for the second destination, wherein calculating the first fare and the second fare is affected by the first or second route strategy received.

The method may further comprise:
generating a first route to the first destination prior to receiving the second destination.

The method may further comprise:
receiving a third destination of a third passenger and a third route strategy from a third device; wherein the third route strategy is different than the first or second route strategies and wherein the third destination is different from the first and second destinations;
receiving an approval of the third route strategy from the first device and the second device; and
generating a new route to the first destination, the second destination, and the third destination, wherein the new route is generated following the third rider destination hierarchy in the third route strategy.

The apparatus of the invention includes at least one processor; and at least one memory including computer program code for one or more programs; the at least one memory and the computer program code configured to, with the at least one processor, cause the apparatus to at least perform: receiving a first destination of a first passenger from a first device; receiving a first route strategy from a first device, wherein the route strategy includes a rider destination hierarchy for a ride sharing algorithm, and wherein a rider destination hierarchy is a rule that dictates how multiple destinations of multiple passengers received from multiple devices are to be ordered along a generated route; receiving a second destination of a second passenger and a second route strategy from a second device, wherein the second route strategy includes a second rider destination hierarchy for the ride sharing algorithm, wherein the second destination is different from the first destination and the second route strategy is different from the first route strategy; and generating, using the ride sharing algorithm, a route to the first destination and the second destination, wherein the route is based on the first rider destination hierarchy, the second rider destination hierarchy, or a combination thereof .

In one embodiment, a method includes transmitting a first destination to a server; receiving one or more route strategy options from the server, wherein the one or more route strategy options include a rider designation hierarchy for a ride sharing algorithm; selecting a route strategy from the one or more route strategy options; transmitting the route strategy to the server; and receiving a route from the server, wherein the route includes the first destination and a second destination, wherein the second destination was received from a second device.

The method may further comprise:
receiving an estimated time of arrival to the first destination from the server.

The method may further comprise:
receiving one or more alternative routes from the server, wherein the one or more alternative routes are generated by the server in response to traffic data.

The method may further comprise:
transmitting an acceptance to the server for one or more of the alternative routes; and
receiving an updated estimated time of arrival to the first destination from the server.

### BRIEF DESCRIPTION OF THE DRAWINGS

Exemplary embodiments of the present invention are described herein with reference to the following drawings.
Figure 1 illustrates an example system for routing multiple passengers to multiple destinations.
Figure 2 illustrates an example method for routing multiple passengers to multiple destinations.
Figure 3 illustrates an example of a last in first out (LIFO) route strategy.
Figure 4 illustrates an example of a first in first out (FIFO) route strategy.
Figure 5 illustrates an example of a cooperative route strategy.
Figure 6 illustrates an example of a prioritized route strategy.
Figure 7 illustrates an example selection screen for a mobile application
Figure 8 illustrates an example selection screen for a mobile application
Figure 9 illustrates an example of a personal navigation device.
Figure 10 illustrates an example re-routing screen for a mobile application.
Figure 11 illustrates an example re-routing screen for a mobile application.
Figure 12 illustrates an example server.
Figure 13 illustrates an example mobile device.
Figure 14 illustrates an example method for routing multiple passengers to multiple destinations.

### DETAILED DESCRIPTION

Routing multiple passengers to multiple destinations is difficult. Each passenger may maintain different preferences for routing and arrival time. A passenger may be in a rush and prefer to be dropped off first regardless of whether that route may be the most efficient for the other passengers. The passenger seeking such priority may be willing to pay more for the fare. A passenger may also be willing to sacrifice his or her time for a fellow passenger and perhaps pay less for the fare. Verbal negotiation between passengers which may or may not be possible under certain circumstances. Passengers may not know one another and may be found at different locations. Passengers may like to know prior to entering a ride sharing vehicle what the outcome may be. Passengers may like to know their estimated time of arrival (ETA) and the route they may take. Finally, construction, accidents, congestion, and other traffic conditions could affect the route that a vehicle might take on the route to each passenger's destination, and therefore the order in which the passengers are dropped off. Each passenger may prefer to contribute to the decision of if and how the vehicle's route is altered.

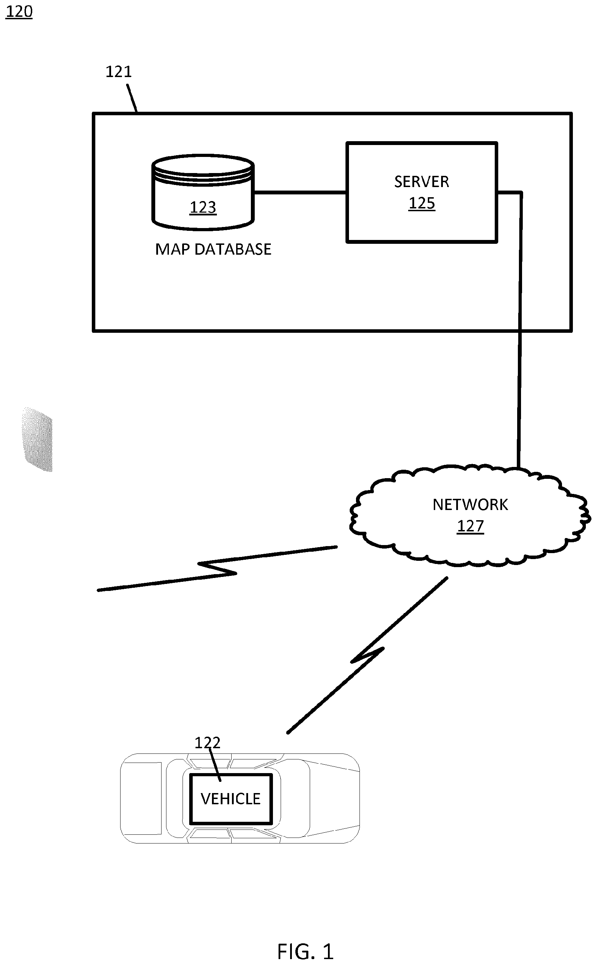

Figure 1 illustrates an example system for routing multiple passengers to multiple destinations. A first device 130 and a second device 131 are connected to a network 127 which is also connected to a server 125. A vehicle 122 is also connected to the network 127. A server 125 and a database 123 make up a navigation system 121. Additional, different, or fewer components may be included.

The term server is used herein to collectively include the computing devices in a navigation system for creating, maintaining, accessing, and updating the databases. The server 125 may be a host for a website or web service such as a mapping service and / or a navigation service. The mapping service may provide maps generated from the geographic data of the database 123, and the navigation service may generate routing or other directions from the geographic data of the database 123.

The term database and map database refers to a set of data or map data stored in a storage medium and may not necessarily reflect specific requirements as to the relational organization of the data or the map data. The database 123 may be a geographic database including road segments and road attributes.

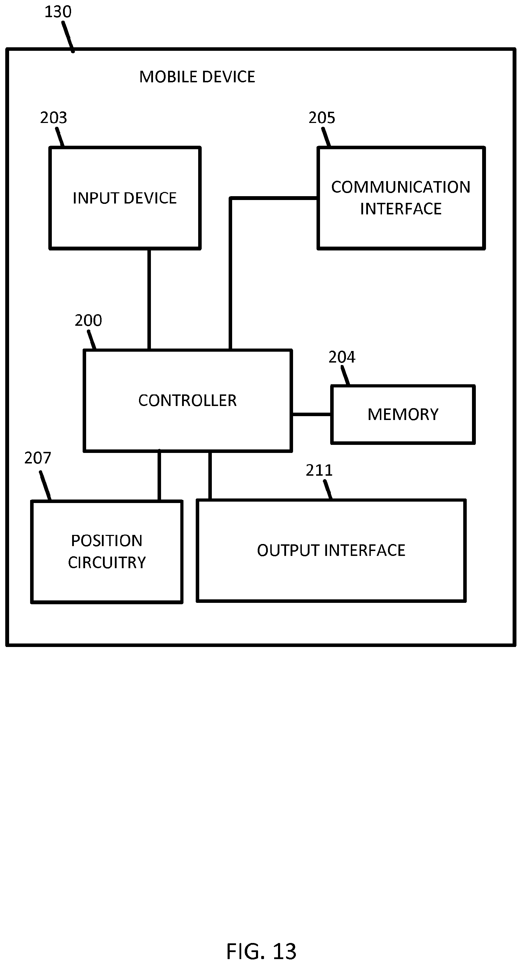

The term vehicle is used herein to collectively refer to a vehicle and any navigation systems or mobile devices contained there within. A navigation system may include a personal navigation device such a portable electronic device that combines positioning capability and navigation functions. A navigation system may also include an application running on a device which is performing navigation duties for the vehicle 125. The navigation system may be built into the vehicle's electronics or be a separate device. The navigation system or the mobile device may include at least one processor, memory, and communication interface (e.g., as shown in Fig. 13).

The network 127 may include wired networks, wireless networks, or combinations thereof. The wireless network may be a cellular telephone network, a wireless local area network, such as an 802.11, 802.16, 802.20, WiMax (Worldwide Interoperability for Microwave Access) network, or wireless short range network. Further, the network 127 may be a public network, such as the Internet, a private network, such as an intranet, or combinations thereof, and may utilize a variety of networking protocols now available or later developed including, but not limited to TCP/IP based networking protocols.

In this embodiment, the first device 130 and second device 131 may be a smart phone, a mobile phone, a personal digital assistant (PDA), a tablet computer, a notebook computer, a personal navigation device (PND), a portable navigation device, and/or any other known or later developed mobile device. The first device 130 and second device 131 may have inputs for potential passengers to specify a destination. The device inputs may be one or more buttons, keypad, keyboard, mouse, stylus pen, trackball, rocker switch, touch pad, voice recognition circuit, or other device or component for inputting data to the devices 130 and 131. A device location may be derived using a positional circuit within the device which may use such services as GPS or GNSS (Global Navigation Satellite System) or entered using a device input.

The devices 130 and 131 transmit data requests though the network 127 to the server 125 to request the vehicle 122 to their locations. The data requests may contains a respective device location, a respective destination and a respective route strategy. The route strategy includes a rider destination hierarchy and set of rules and guidelines. The server 125 using the mapping service and / or the navigation service generates a route to both the destinations following one or more rider destination hierarchies and any rules or guidelines that are stated in the one or more respective route strategies. The data containing the route and any supplemental information is then transmitted back though the network 127 to the devices 130 and 131 for their acceptance. The supplemental information may include additional data such as estimated time of arrival, a potential fare, or alternative routes. The data containing the route and any supplemental information may also be transmitted through the network 127 to the vehicle 122.

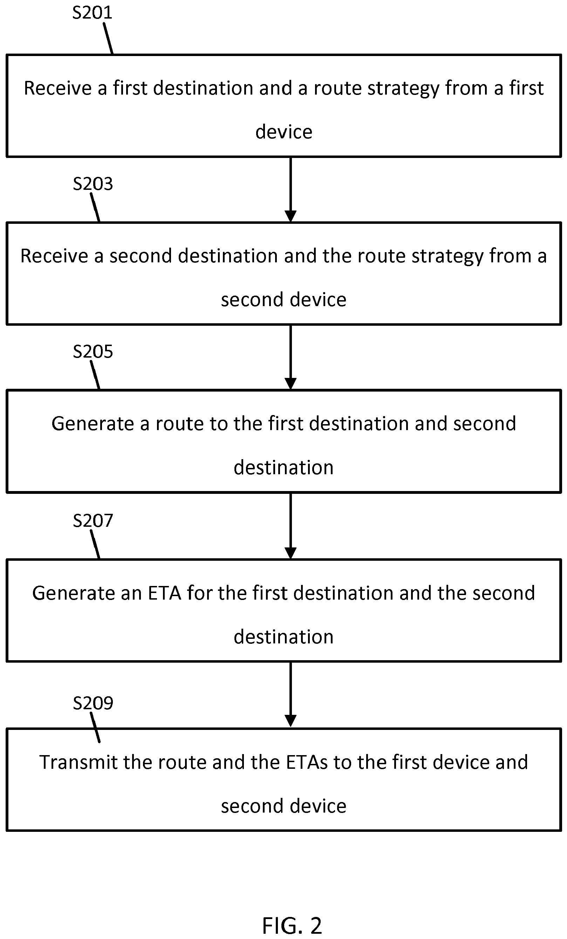

Figure 2 illustrates a method of routing multiple passengers to multiple destinations. At step S201, the server 125 receives data including a first destination from a first device 130 along with a route strategy. The route strategy may include a rider destination hierarchy. The rider destination hierarchy controls which destination is, or how multiple destinations are prioritized. The rider destination hierarchy also controls which passenger makes decisions regarding route or destination changes, or controls how multiple passengers are prioritized to make route and/or destination changes. In some embodiments, outside the scope of claim 1, the route strategy may not contain a rider destination hierarchy. In an embodiment without a rider destination hierarchy, the route strategy may directly control with passenger makes decisions regarding route or destination changes or controls how multiple passengers may be prioritized to make route and/or destination changes. There are multiple different route strategies that may be received. One route strategy may be labeled cooperative which indicates that the rider destination hierarchy prioritizes the most efficient route for all passengers which giving priority to any passenger. Other route strategies may include last in first out (LIFO), first in first out (FIFO), single direction, known destination, and prioritized routing among others.

At step S203 the server 125 receives data including a second destination and the same route strategy from a second device 131. Any of the route strategies may require that all of the passengers agree upon a single route strategy. In some examples, the route strategy may differ and the route may still be generated. In this case, the route strategy from the second device 131, i.e. a second route strategy, may be different than the route strategy from the first device 130, i.e. a second route strategy.

At step S205 the server 125 generates data including a route to the first destination and the second destination using the rules within the first and/or second route strategy.

In addition to the route strategy, the server 125 may have other inputs. These include a starting point, the first destination, and the second destination. The server 125 may also receive data from the database 123. The database 123 may contain a database of roads, a traffic on the roads, or a combination thereof. Once the server 125 has the data, shortest path algorithms may optimize the costs of a route. Different costs functions may be used such as length of the route, travel time, or tolls. In certain embodiments, the server 125 generates a route that minimizes the length of the route or the travel time. The travel time may depend on current traffic conditions or predicted traffic conditions. In certain embodiments, the server 125 may also receive traffic data that once combined with the data from the database, may alter the cost of the route (in time, distance, or tolls).

At step S207, the server 125 may then generate an estimated time of arrival (ETA) for each destination including in the route. The server 125 may receive data from the database 123 to generate an ETA. The database 123 may contain a database of roads along with road attributes such as speed limit, pavement conditions, stop lights, weather conditions, or other road attributes. The server 125 may also receive traffic data that once combined with the data from the database 123 may allow the server 125 to generate a travel time to each destination.

At step S209, the server 125 transmits the data including to the devices 130, 131 and a vehicle 122. An ETA, if calculated, is also transmitted to each respective device for their respective destinations.

A similar route strategy may allow the server 125 to generate a route and an ETA. A similar route strategy allows the multiple passengers to be in agreement on the route and which passenger is to be dropped off first without having to negotiate once the ride is in progress.

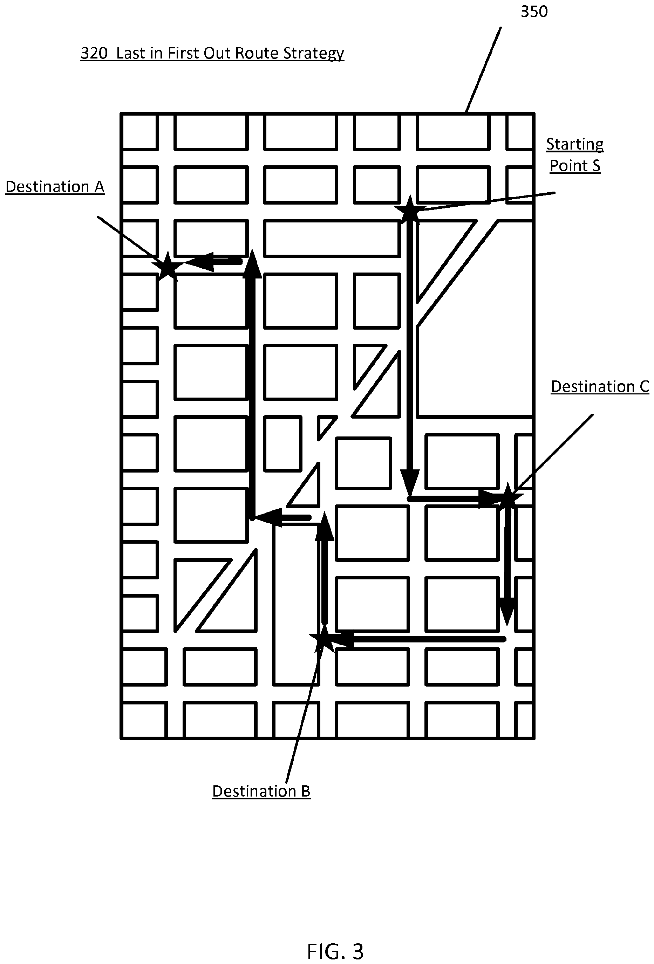

Figures 3-6 illustrate example embodiments using different selected route strategies. The route strategy is received from each passenger along with the passenger's destinations. The route strategy includes a rider destination hierarchy. The rider destination hierarchy dictates how the destinations are ordered along the route. Figures 3-6 use a map 350 to illustrate the routes. In these embodiments, there are three distinct passengers X, Y, and Z in the vehicle and three distinct destinations A, B, and C. The passengers were picked up in the order X, Y, then Z (X was first, Y was second, and Z is third). The current location (starting point) of the vehicle is labeled S.

Figure 3 illustrates the last in first out (LIFO) strategy. As the name implies, the last passenger picked up is the first to be dropped off. Since the last passenger to be picked up was Z, the first destination on the route is C. Once Z is dropped off, the last passenger to be picked up in the vehicle is Y. Therefore the second destination on the route is B. Finally, with only X in the vehicle, the final destination is A. In this strategy, X is inconvenienced by having to make additional stops on her way to her destination. Y is also inconvenienced, but less than X as Y only has to wait out one additional stop. This route strategy is the most ideal for passenger Z as Z is taken directly to his destination.

In an embodiment that is using the LIFO route strategy, the server 125 receives data including a first destination and the LIFO route strategy from the first device 130. The first destination may be formatted in various ways such as a street address, GPS coordinates, a point of interest, street intersections, or a previously saved location among other formats. The data including the first destination may also include a destination Identification and a priority identification. The LIFO route strategy may contain one or more sets of data. The LIFO route strategy may contain a set of data that represents the rider destination hierarchy. The rider destination hierarchy contains a set of rules for which destination is to be the next stop in the route. In an embodiment, the data for the first destination may be represented as the destination identification value D0001. The server 125 then receives data including a second destination and the LIFO route strategy from the second device 131. The second destination may be represented as the value D0002. For the LIFO route strategy, the rider destination hierarchy specifies that the last in rider's destination is the next stop. This rule may be written as select the highest destination value to be the next stop. Since D0002 is greater than D0001, the next stop is the second destination. The server 125 is then generates a route using the first destination, the second destination, and the rider destination hierarchy which states that the second destination is the first stop on the route. The server 125 may use the navigation service to generate routing or other directions from the geographic data of the database.

The LIFO strategy is also similar to a single direction (SD) route strategy. The SD tends to work best with longer rides. In the SD route strategy, a route is generated to the first passenger's destination A. Any stops should be located along the route to A. This route strategy is efficient as it does not veer off course, but still may get each passenger to their respective destinations. As this strategy only works when the destinations are located along the first route, this may not be an option for a potential passenger when requesting a vehicle. The passenger may select this option if the passenger is the first person in the vehicle. However, the passenger should be aware that selecting this option may mean that additional passengers could be picked up and dropped off before her which may adjust her ETA.

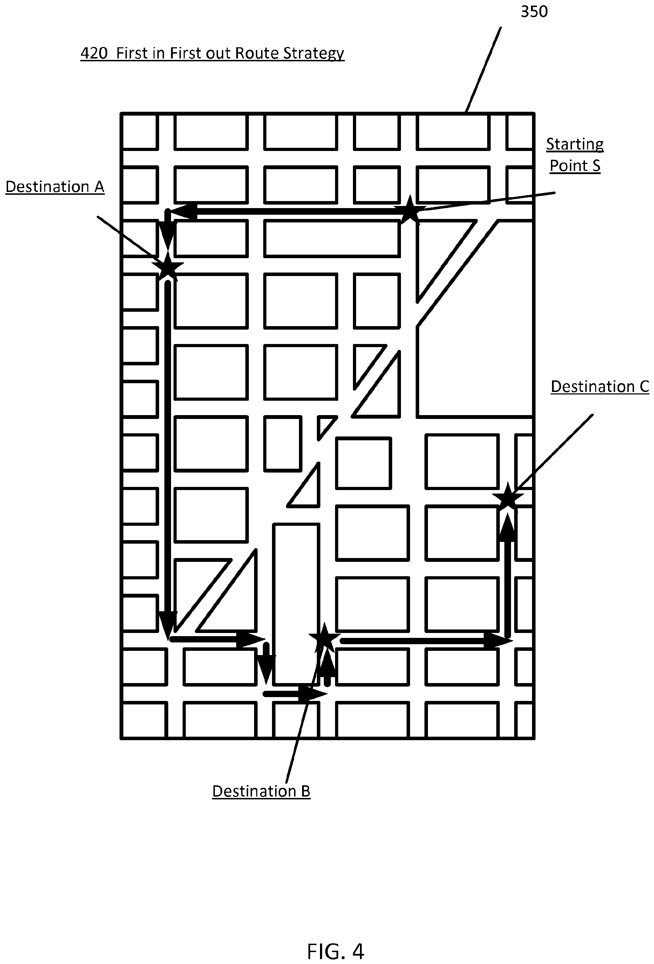

Figure 4 illustrates the first in first out (FIFO) strategy. As the name implies, the first passenger to be picked up is the first passenger dropped off. The first passenger to be picked up was X, therefore the first destination is A. The second passenger to be picked up is Y, therefore the second destination is B. Finally, the last passenger to be picked up was Z, therefore the final destination is C. The FIFO route strategy is also known as non-cooperative routing. In this embodiment, the first passenger wants the fastest route to his destination regardless of his fellow passenger's destinations. This may entail an inefficient route to the second or third destination. In this embodiment, it is beneficial to know each destination's ETA in order to be aware that the route is not the most efficient and destinations B and C may take longer to traverse than a direct route.

In an embodiment that is using the FIFO route strategy, the server 125 receives data including a first destination and the FIFO route strategy from the first device 130. The first destination may be formatted in various ways such as a street address, GPS coordinates, a point of interest, street intersections, or a previously saved location among other formats. The data including the first destination may also include a destination Identification and a priority identification. The FIFO route strategy may contain one or more sets of data. The FIFO route strategy may contain a set of data that represents the rider destination hierarchy. The rider destination hierarchy contains a set of rules for which destination is to be the next stop in the route. In an embodiment, the data for the first destination may be represented as the destination identification value D0001. The server 125 then receives data including a second destination and the FIFO route strategy from the second device 131. The second destination may be represented as the value D0002. For the FIFO route strategy, the rider destination hierarchy specifies that the first in rider's destination is the next stop. This rule may be written as select the lowest destination value to be the next stop. Since D0001 is less than D0002, the next stop is the first destination. The server 125 is then generates a route using the first destination, the second destination, and the rider destination hierarchy which states that the first destination is the first stop on the route. The server 125 may use the navigation service to generate routing or other directions from the geographic data of the database.

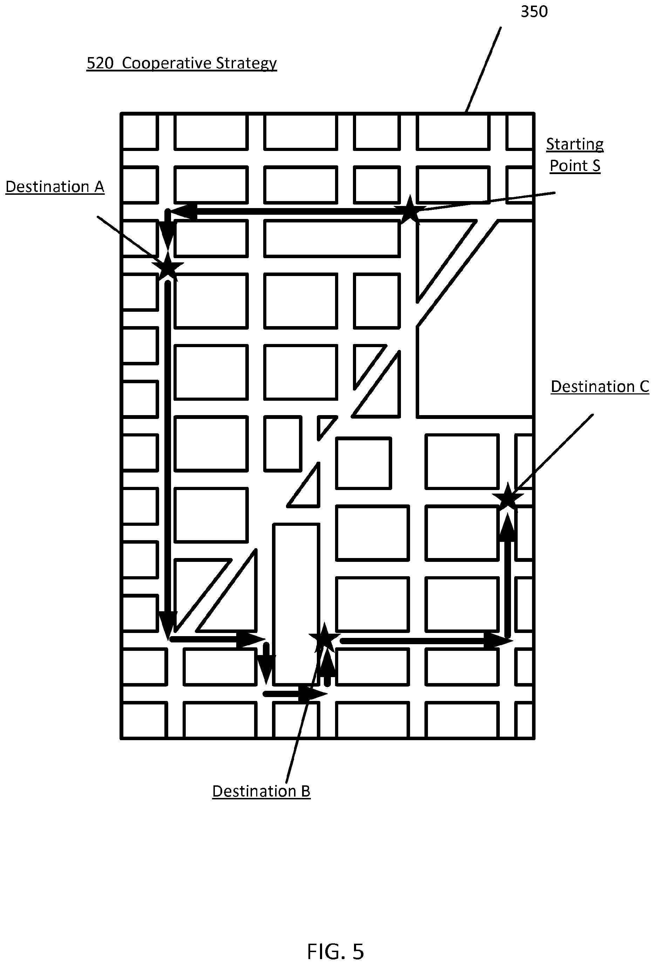

Figure 5 illustrates the cooperative route strategy. The cooperative route strategy generates the most efficient route between destinations. In Figure 5, the most efficient route is B -> C -> A. This routing strategy focusing on either the shortest of faster path between all destinations. This strategy is closest to the Traveling Salesman Problem where the route is the shortest distance between all points while only stopping at each point once.

In an embodiment that uses the cooperative route strategy, the server 125 receives data including a first destination and the cooperative route strategy from the first device 130. The first destination may be formatted in various ways such as a street address, GPS coordinates, a point of interest, street intersections, or a previously saved location among other formats. The data including the first destination may also include a destination Identification and a priority identification. The cooperative route strategy may contain one or more sets of data. The cooperative route strategy may contain a set of data that represents the rider destination hierarchy. The rider destination hierarchy contains a set of rules for which destination is to be the next stop in the route. In an embodiment, the data for the first destination may be represented as the value D0001. The server 125 then receives data including a second destination and the cooperative route strategy from the second device 131. The second destination may be represented as the value D0002. For the cooperative route strategy, the rider destination hierarchy specifies that a route that minimizes the cost is used. The cost here may be time, distance, tolls, or other measurements. The server 125 may use the navigation service to generate routing or other directions from the geographic data of the database. The server 125 may generate a route using the first destination, the second destination, and the rider destination hierarchy which states that the route that best minimizes the cost is used.

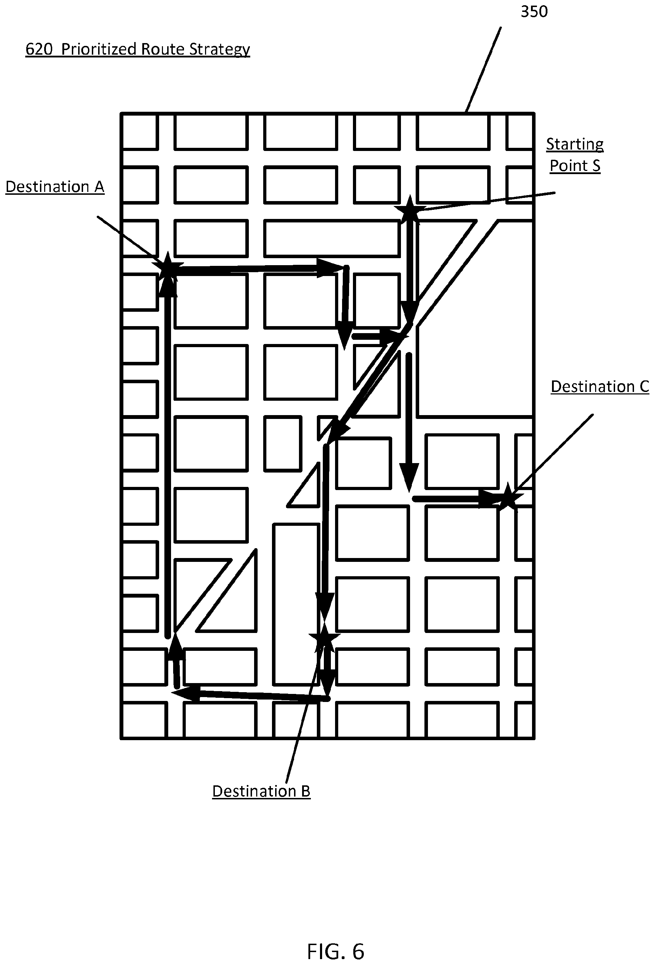

Figure 6 illustrates a prioritized routing strategy. Prioritized routing assigns each passenger (and therefore each destination) a priority. The route generated is then based off this priority list. In Figure 6, passenger Y has the highest priority and therefore B is the first destination. Passenger X has a higher priority than Z, therefore A is the next destination, with C being the final destination.

The priority list for prioritized routing may be based on any number of factors. Two examples are compensation or frequent use. In the first example, the passenger may offer more compensation to be the highest priority. Alternatively, a passenger who does not care about being the highest priority may pay a lower than normal fare. In the second example, passengers may be prioritized based on their use of the system. A passenger who uses the service every day may be given priority over a passenger or infrequently uses the service. Other priority systems may include a tiered based system (Gold / Elite / Silver / etc.), corporate based (all of company B's passengers are automatically the highest priority), or based on a class of people (armed services, elderly, etc.).

In an embodiment that is using the prioritized route strategy, the server 125 receives data including a first destination and the prioritized route strategy from the first device 130. The first destination may be formatted in various ways such as a street address, GPS coordinates, a point of interest, street intersections, or a previously saved location among other formats. The data including the first destination may also include a destination Identification and a priority identification. The prioritized route strategy may contain one or more sets of data. The prioritized route strategy may contain a set of data that represents the rider destination hierarchy. The rider destination hierarchy contains a set of rules for which destination is to be the next stop in the route. In an embodiment, the data for the first destination may be represented as the priority identification value P0005. The server 125 then receives data including a second destination and the prioritized route strategy from the second device 131. The second destination may be represented as the value P0002. For the prioritized route strategy, the rider destination hierarchy specifies that the highest priority rider's destination is the next stop. This rule may be written as selecting the highest priority value to be the next stop. Since P0005 is greater than P0002, the next stop is the first destination. The server 125 is then generates a route using the first destination, the second destination, and the rider destination hierarchy which states that the first destination is the first stop on the route. The server 125 may use the navigation service to generate routing or other directions from the geographic data of the database.

In certain embodiments, other route strategies may be used. A route strategy may specify that the route minimize distance or time. A route strategy may specify that the route prioritize a specific destination. A route strategy may specify stopping first at predetermined locations. A route strategy may specify destinations that are located on certain types of road. A route strategy may be implemented that may prioritize any order or type of destination for any number of reasons.

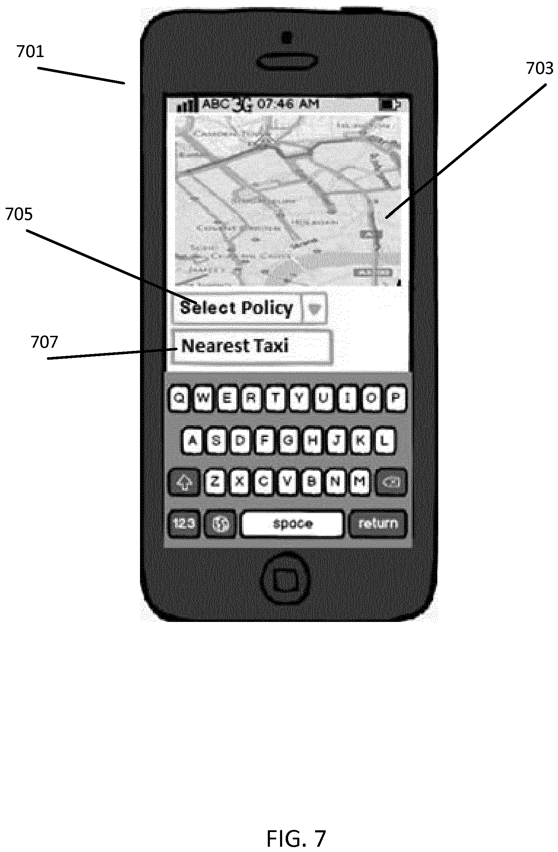

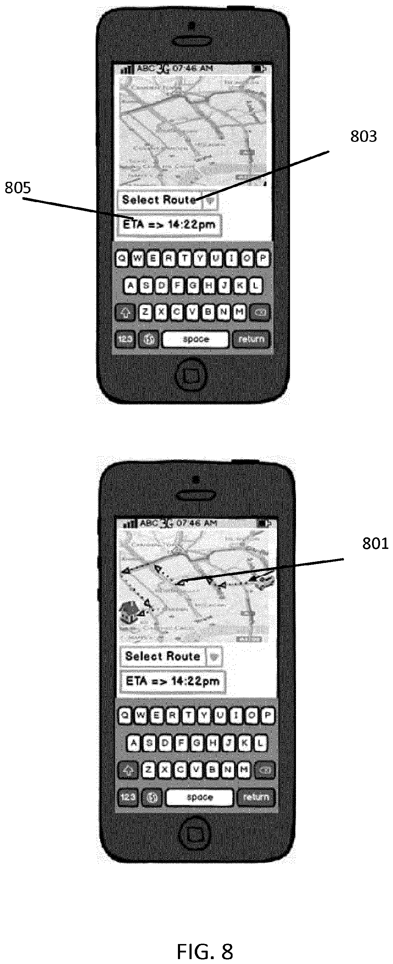

For each of the route strategies a different route may be generated. These choices may be presented to each potential passenger on the first or second device. Figures 7 and 8 illustrate embodiments of how these choices may be presented to the passenger.

Figures 7 and 8 illustrate a selection screen for a mobile application. Figure 7 illustrates an embodiment where the mobile device 701 shows a map 703 indicating the passenger's present location along with a drop down box 705, 707 for route strategy choices. In this embodiment the vehicles providing this service may have published their respective routing strategies to the server 125. The passenger may search on and browse for vehicles that are using the route strategy that the passenger is willing to use and pay for. A passenger selecting a strategy such as FIFO may only see vehicles which are running the FIFO route strategy.

Figure 8 illustrates an embodiment where once the route strategy and a vehicle is selected the server 125 may return data including a selection of alternative routes 803 and an ETA 805 for the passenger's destination. A passenger may select which route 801 to accept. Using this example, a passenger may browse multiple vehicles and different route strategies to find an ETA which is acceptable. Additionally, the server 125 may transmit data including the fare cost for each destination. By browsing through multiple route strategies and vehicles, a passenger may maintain a level of control and flexibility to select a routing preference and the willingness to pay for it.

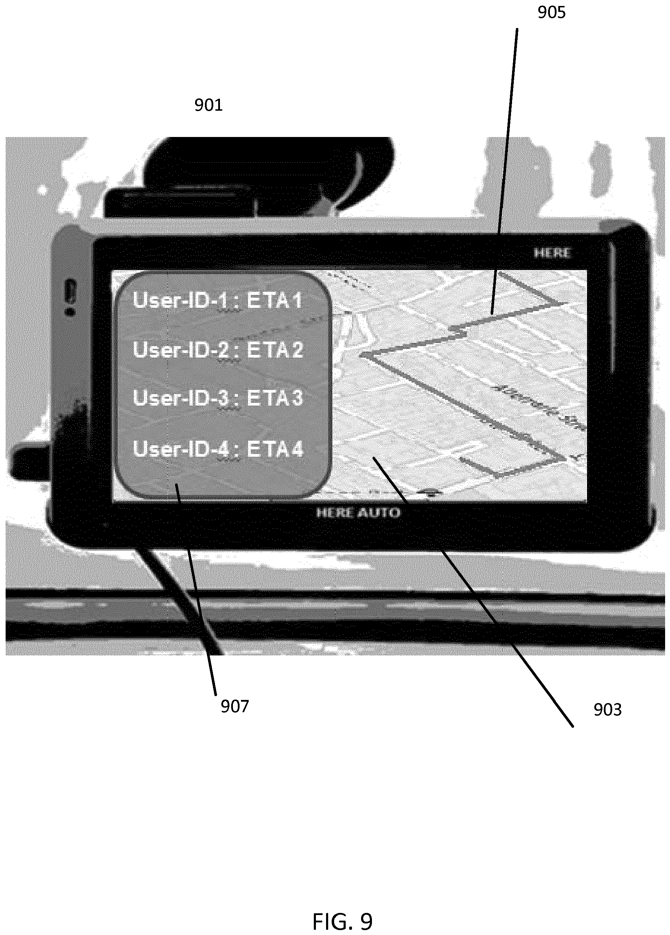

Once the route and route strategy has been selected by the passenger and the acceptance transmitted back to the server 125, the server 125 may transmit this data to the vehicle. The vehicle may be operating a standalone or personal navigation device. A personal navigation device may store a local copy of a map database. The personal navigation device may include a display. This display may show a map, a route, the vehicle's eta to each destination, or a combination thereof. Figure 9 illustrates an example of a personal navigation device 901 that shows a map 903, routes 905, and four separate ETAs 907 for Users 1-4.

In transit, many incidents may lead to a route being altered. Road or building construction, accidents, gridlock, or other traffic conditions may arise and affect a route that was previously agreed upon by the multiple passengers. When this occurs, the server 125 may generate alternative routes to each destination using a variety of algorithms and priorities. These alternative routes are then transmitted to the multiple passengers. The passengers then decide or vote for which route they prefer the vehicle to take. In some embodiments, a singular passenger has control over the re-routing decisions. When the new alternative route has been selected, the server 125 may transmit updated ETA's to each passenger.

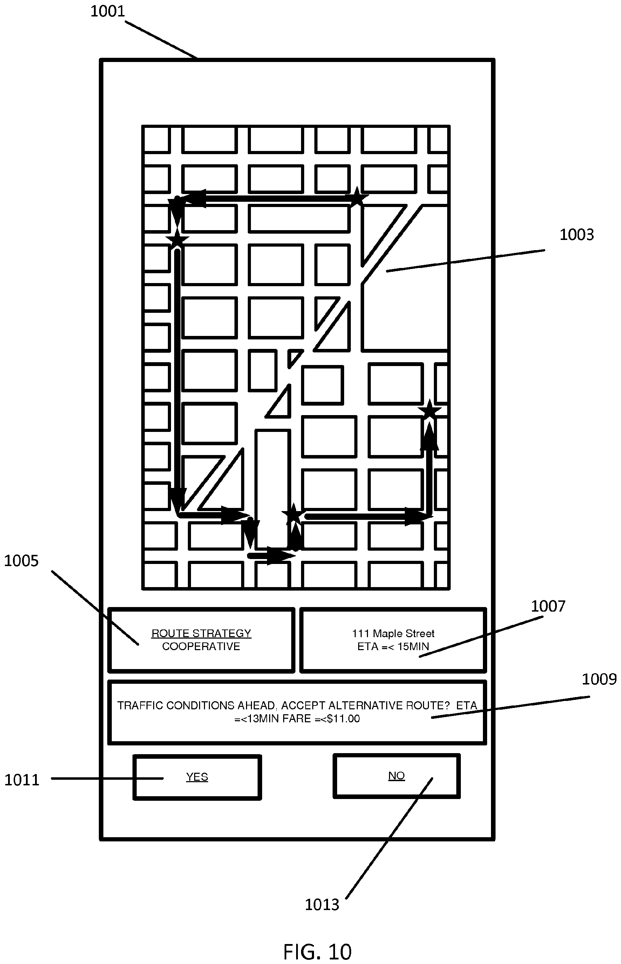

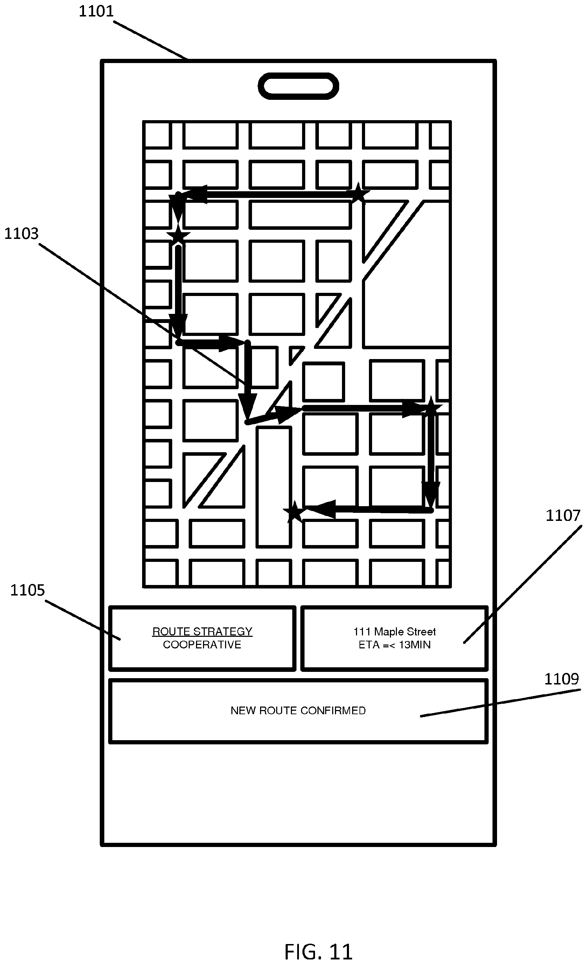

Figures 10 and 11 illustrate a display screen 1001 for a mobile device where an alternative route has been sent to the mobile device. In Figure 10, the display screen 1001 contains a map 1003 including the current route, a route strategy display box 1005, a destination / ETA display box 1007, an alert box 1009, and electronic keys for Yes 1011 and No 1013. In this embodiment, the server 125 has received traffic data which affects the current route. The server 125 then generates data including one or more alternative routes. In certain embodiments, the new routes may also be displayed in the map 1003 alongside the current route. These routes may maintain the rider destination hierarchy. Depending on the route strategy being used, this may maintain the destination order. However, in an embodiment where the vehicle is following a Cooperative route strategy, the destination order may change in order to provide one or more alternative routes which attempt to maximize efficiency.

The server 125 transmits the data including the one or more alternative routes to the each device. Each passenger may contribute to the decision of which alternative route, if any, to take. How re-routing decisions are made depends on the route strategy the vehicle is using.

If the vehicle is using the FIFO route strategy, then only the next passenger in-line to be dropped at his destination contributes to the decision. This passenger may receive the alternative routes from the server 125 with the ability to accept or reject each one. Once the alternative route is accepted, the server 125 may transmit the updated estimated times of arrival to each of the devices.

If the vehicle is using the LIFO route strategy, then only the first passenger in the vehicle contributes to the decision. This passenger may receive the alternative routes from the server 125 with the ability to accept or reject each one. Once the alternative route is accepted, the server 125 may transmit the updated estimated times of arrival to each of the devices.

If the vehicle is using a single direction (SD) route strategy, then only the first passenger in the vehicle contributes to the decision to choose an alternative route. This passenger may receive the alternative routes from the server 125 with the ability to accept or reject each one. When using a SD route strategy, the alternative routes supplies by the server 125 may ensure that the vehicle does not miss any of the destinations of other passengers that were originally in transit. Once the alternative route is accepted, the server 125 may transmit the updated estimated times of arrival to each of the devices.

If the vehicle is using a cooperative route strategy, then all of the passengers in the vehicle may contribute to the decision to choose an alternative route. The passengers enter in their acceptance or rejection of each route using device inputs on their respective devices. The one or more devices 130, 131 update a route acceptance indicator. The one or more device 130, 131 then transmit the route acceptance indicators to the server 125. The server 125 receives the route acceptance indicators and then processes the indicators for each alternative route. The route that has the most acceptances is then selected by the server 125. The server may calculate updated ETAs for each destination. The server 125 then transmits the alternative route to each device. The server 125 may then transmit the updated estimated times of arrival to each of the devices. If the vehicle is using the cooperative route strategy, the destination order may change during a re-route depending on which alternative route is selected. In another embodiment, the server 125 may only transmit a route that maximizes the time for the total trip. If this alternative route receives more acceptances than rejections, it may be selected.

Figure 11 illustrates a display screen 1101 for a mobile device where the device has received an alternative route 1103. The alternative route has been voted on and confirmed 1109. In comparison with Figure 10, the route strategy has stayed the same cooperative, but the route has been changed 1103. The new ETA for the passenger's destination is now 13 minutes.

If the vehicle 122 is using a priority route strategy, then the passenger with the highest priority may contribute to the decision to choose an alternative route. This passenger may receive the alternative routes from the server 125 with the ability to accept or reject each one. Once the alternative route is accepted, the server 125 may transmit the updated estimated times of arrival to each of the devices.

In an embodiment, first and second devices 130, 131 are in route to their respective destinations using an original route generated by the server 125 and following their route strategy. The server 125 may receive traffic data. This data may be received from multiple sources including but not limited to automatic collection such as electronic traffic counters, automatic traffic recorders, or other sensors. Data may also be received from individuals who report traffic or accidents. Data may also be received from civic, governmental, or other groups. Data may also be updated by a map developer. The traffic data received may be used to update or augment the database 123 including altering the cost of road segments.

The traffic data may alter the cost of the original route that was previously generated by the server 125. The server 125 may query the database 123 at a predetermined frequency to verify that the traffic data has not changed the cost of the original route. If a route cost has been altered, the server 125 may then generate alternative routes following the route strategy and including all destinations. These alternative routes may or may not minimize the cost of an original route even considering the traffic data. The server 125 may generate ETAs for each destination along the original route and the alternative routes. If there is a change in the ETA for the original route, the server 125 may transmit the updated ETA to each device 130, 131.

If the alternative route's ETA is less than the original route's eta for any destination, the server 125 may then transmit the alternative routes to each device 130, 131. The data transmitted may contain a route identification number and a list of road segments that make up the route. If the server 125 receives acceptances or rejections from the devices, the route identification number may be used to identify the alternative route selected.

In certain embodiments, as mentioned above, the devices (passengers) may contribute to the decision of which alternative route to select. The server 125 may have received the route strategy prior to transmitting the alternative route. The server 125 transmits data containing the alternative route to the devices that may contribute to the decision.

If the vehicle 122 is using the FIFO route strategy, then only the next passenger in-line to be dropped at his destination contributes to the decision. The server 125 may transmit data including the alternative routes to the device of this passenger. The passenger using the device inputs on the device may accept or reject each one and update the route acceptance indicator. The device transmits the data to the server 125 including the route identification number and the route acceptance indicator. The server 125 processes the route acceptance indicator and determines which alternative route has been accepted. Once the alternative route is accepted, the server 125 may transmit the updated estimated times of arrival to each of the devices.

If the vehicle 122 is using the LIFO route strategy, then only the first passenger in the vehicle 122 contributes to the decision. This passenger may receive the alternative routes from the server 125 with the ability to accept or reject each one. Once the alternative route is accepted, the server 125 may transmit the updated estimated times of arrival to each of the devices.

In addition to generating and transmitting alternative routes due to traffic, the server 125 may also transmit a request to the devices to alter the route strategy that is being used by the vehicle 122. In such an embodiment, a new passenger may select a different route strategy than the current strategy being used by the vehicle 122. The server 125 may transmit the new route strategy, and any alternative route changes that the new route strategy may entail, to each passenger using the vehicle 122. The passengers may then transmit an approval or rejection to the server 125 using a route acceptance indicator. In consideration of making the route strategy change, the current passengers may have their fare lowered or be given other rewards. The ability to change route strategies may allow vehicles to be more flexible with the passengers that may be picked up while still maintaining the acceptance of the vehicle's current passengers.

In certain embodiments, a fare is charged to a passenger to transport the passenger to a destination. The size of the fare depends on factors such as the length of the trip (in time and distance), Tolls, government regulations, and other conditions. In certain embodiments, the fare will depend upon the route strategy being used by the vehicle 122. One of the benefits of having multiple passengers in a vehicle 122 may be the possibility that the cost (distance / time / etc.) of the total route between all destinations is less than the trips taken individually. As mentioned above, a passenger may be charged less for a fare if the passenger is willing to take a longer route to a destination in order to drop off another passenger first. Similarly, a passenger may be charged more for a fare if the passenger requests a direct route to a destination.

The fare is generated by the server 125 each time a route and destination is generated. The server 125 may take into effect the factors listed above, the route strategy, and any current or potential passengers. The fare is also subject to change due to traffic conditions or if the route is altered due to a route strategy change.

The server 125, the first device 130, and the second device 131 are coupled with the network 127. The phrase "coupled with" is defined to mean directly connected to or indirectly connected through one or more intermediate components. Such intermediate components may include hardware and/or software-based components.

The network 127 may include wired networks, wireless networks, or combinations thereof. The wireless network may be a cellular telephone network, an 802.11, 802.16, 802.20, or WiMax network. Further, the network 127 may be a public network, such as the Internet, a private network, such as an intranet, or combinations thereof, and may utilize a variety of networking protocols now available or later developed including, but not limited to TCP/IP based networking protocols.

The vehicle 122 may be assisted driving vehicles. Assisted driving vehicles include autonomous vehicles, highly assisted driving (HAD), and advanced driving assistance systems (ADAS). Alternatively, an assisted driving device may be included in the vehicle 122.

The term autonomous vehicle may refer to a self-driving or driverless mode in which no passengers are required to be on board to operate the vehicle. An autonomous vehicle may be referred to as a robot vehicle or an automated vehicle. The autonomous vehicle may include passengers, but no driver is necessary. These autonomous vehicles may park themselves or move cargo between locations without a human operator. Autonomous vehicles may include multiple modes and transition between the modes.

A highly assisted driving (HAD) vehicle may refer to a vehicle that does not completely replace the human operator. Instead, in a highly assisted driving mode, the vehicle may perform some driving functions and the human operator may perform some driving functions. Vehicles may also be driven in a manual mode in which the human operator exercises a degree of control over the movement of the vehicle. The vehicles may also include a completely driverless mode. Other levels of automation are possible.

The road link data records of the database 123 may be associated with attributes of or about the roads such as, for example, geographic coordinates, street names, address ranges, speed limits, turn restrictions at intersections, and/or other navigation related attributes (e.g., one or more of the road segments is part of a highway or tollway, the location of stop signs and/or stoplights along the road segments), as well as points of interest (POIs), such as gasoline stations, hotels, restaurants, museums, stadiums, offices, automobile dealerships, auto repair shops, buildings, stores, parks, etc. The node data records may be associated with attributes (e.g., about the intersections) such as, for example, geographic coordinates, street names, address ranges, speed limits, turn restrictions at intersections, and other navigation related attributes, as well as POIs such as, for example, gasoline stations, hotels, restaurants, museums, stadiums, offices, automobile dealerships, auto repair shops, buildings, stores, parks, etc. The geographic data may additionally or alternatively include other data records such as, for example, POI data records, topographical data records, cartographic data records, routing data, and maneuver data.

The databases 123 may be maintained by one or more map developers. A map developer collects geographic data to generate and enhance the database. There are different ways used by the map developer to collect data. These ways include obtaining data from other sources such as municipalities or respective geographic authorities. In addition, the map developer may employ field personnel to travel by vehicle along roads throughout the geographic region to observe features and/or record information about the features. Also, remote sensing such as, for example, aerial or satellite photography may be used.

The database 123 may be master geographic databases stored in a format that facilitates updating, maintenance, and development. For example, a master geographic database or data in the master geographic database is in a spatial format or other spatial format, such as for development or production purposes. The Oracle spatial format or development/production database may be compiled into a delivery format such as a geographic data file (GDF) format. The data in the production and/or delivery formats may be compiled or further compiled to form geographic database products or databases that may be used in end user navigation devices or systems.

For example, geographic data is compiled (such as into a physical storage format (PSF) format) to organize and/or configure the data for performing navigation-related functions and/or services, such as route calculation, route guidance, map display, speed calculation, distance and travel time functions, and other functions, by a navigation device. The navigation-related functions may correspond to vehicle navigation, pedestrian navigation, or other types of navigation.

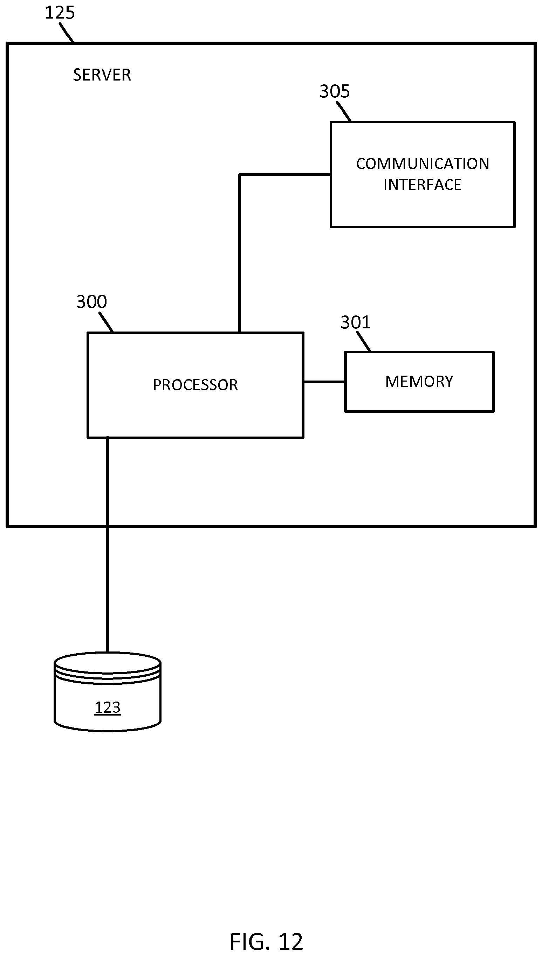

Figure 12 illustrates an example server 125. The server 125 includes a processor 300, a communication interface 305, and a memory 301. The server 125 may be coupled to a database 123 and a workstation 310. The database 123 may include a versioned map data partitioned by layers and tiles. Additional, different, or fewer components may be provided in the server 125.

Figure 13 illustrates an exemplary first device 130 or second device 131 of the system of Figure 1. Alternatively, the components of Figure 13 may correspond to a mobile device or navigation system in vehicle 122. The mobile device 130 includes a controller 200, a memory 204, an input device 203, a communication interface 205, position circuitry 207, and an output interface 211. The output interface 211 may present visual or non-visual information such as audio information. Additional, different, or fewer components are possible for the mobile device 130. For example, the mobile device may be a simplified mobile device which includes position circuitry 207 and/or a communication interface 207 configured to provide a location of an attached item. The mobile device 130 is a smart phone, a mobile phone, a personal digital assistant (PDA), a tablet computer, a notebook computer, a personal navigation device (PND), a portable navigation device, and/or any other known or later developed mobile device. The positioning circuitry 207, which is an example of a positioning system, is configured to determine a geographic position of the mobile device 130. In an embodiment, components as described herein with respect to the mobile device 130 may be implemented as an item location tracking device.

The positioning circuitry 207 may include suitable sensing devices that measure the traveling distance, speed, direction, and so on, of the mobile device 130. The positioning system may also include a receiver and correlation chip to obtain a GPS signal. Alternatively or additionally, the one or more detectors or sensors may include an accelerometer and/or a magnetic sensor built or embedded into or within the interior of the mobile device 130. The accelerometer is operable to detect, recognize, or measure the rate of change of translational and/or rotational movement of the mobile device 130. The magnetic sensor, or a compass, is configured to generate data indicative of a heading of the mobile device 130. Data from the accelerometer and the magnetic sensor may indicate orientation of the mobile device 130. The mobile device 130 receives location data from the positioning system. The location data indicates the location of the mobile device 130.

The positioning circuitry 207 may include a Global Positioning System (GPS), Global Navigation Satellite System (GLONASS), or a cellular or similar position sensor for providing location data. The positioning system may utilize GPS-type technology, a dead reckoning-type system, cellular location, or combinations of these or other systems. The positioning circuitry 207 may include suitable sensing devices that measure the traveling distance, speed, direction, and so on, of the mobile device 130. The positioning system may also include a receiver and correlation chip to obtain a GPS signal. The mobile device 130 receives location data from the positioning system. The location data indicates the location of the mobile device 130. In an embodiment, the communication interface 205 may be operate as position circuitry 207, such as by using Bluetooth communication protocols operable to indicate a relative location of one device from another.

The input device 203 may be one or more buttons, keypad, keyboard, mouse, stylus pen, trackball, rocker switch, touch pad, voice recognition circuit, or other device or component for inputting data to the mobile device 130. The input device 203 and the output interface 211 may be combined as a touch screen, which may be capacitive or resistive. The output interface 211 may be a liquid crystal display (LCD) panel, light emitting diode (LED) screen, thin film transistor screen, or another type of display. The output interface 211 may also include audio capabilities, or speakers. In an embodiment, the output interface 211 is operational to display an image of a geographic area. The image may be correlated to the current location of the mobile device using position circuitry 207. In an embodiment, the input device 203 may be operational to allow a user to select items from a presented list of items.

The controller 200 may include a general processor, digital signal processor, an application specific integrated circuit (ASIC), field programmable gate array (FPGA), analog circuit, digital circuit, combinations thereof, or other now known or later developed processor. The controller 200 may be a single device or combinations of devices, such as associated with a network, distributed processing, or cloud computing.

The memory 204 and/or memory 301 may be a volatile memory or a non-volatile memory. The memory 204 and/or memory 301 may include one or more of a read only memory (ROM), random access memory (RAM), a flash memory, an electronic erasable program read only memory (EEPROM), or other type of memory. The memory 204 and/or memory 301 may be removable from the mobile device 130, such as a secure digital memory card.

The communication interface 205 and/or communication interface 305 may include any operable connection. An operable connection may be one in which signals, physical communications, and/or logical communications may be sent and/or received. An operable connection may include a physical interface, an electrical interface, and/or a data interface. The communication interface 205 and/or communication interface 305 provides for wireless and/or wired communications in any now known or later developed format.

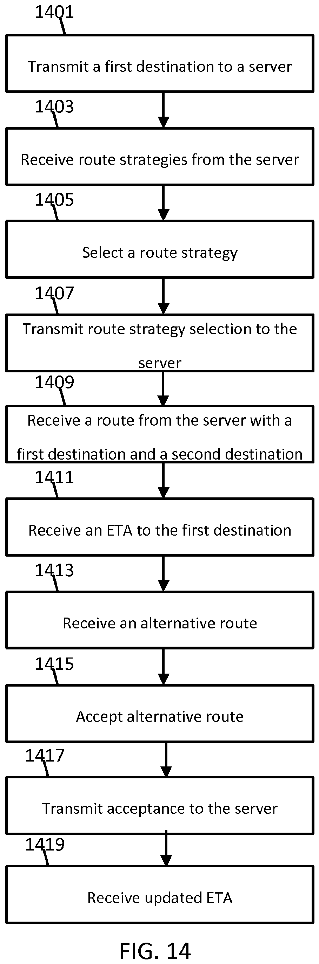

Figure 14 illustrates an example method for routing multiple passengers to multiple destinations. At step 1401, a first device 130 transmits data through a network 127 including a first destination to a server 125. The first destination may have been entered into the first device 130 through the input device 203. The input device 203 may be one or more buttons, keypad, keyboard, mouse, stylus pen, trackball, rocker switch, touch pad, voice recognition circuit, or other device or component for inputting data to the first device 130. The first destination may be data that is formatted as an address, GPS coordinates, or any other locational identifier. The data may be transmitted using the communication device 205.

The first device 130 may also transmit its present location to the server 125. This data may be acquired through the positional circuity 207 and transmitted using the communication device 205. The present location data may be formatted as an address, GPS coordinates, or any other locational identifier.

At step 1403 the first device 130 receives one or more route strategies from the server 125 though the communication device 205. As discussed above, the route strategies may be FIFO, LIFO, SD, cooperative, prioritized routing, or another applicable route strategy. The first device 130 may also receive potential routes, expected fare, and / or an ETA to the first destination. Once received the route strategies and other data may be stored in memory 204. This data including the route strategy may be displayed though the output interface 211.

At step 1405 the first device 130 selects the route strategy. This may be done using the input device 203 and controller 200 operating on the data received previously and stored in memory 204. The output interface 211 may display the one or more route strategies and the resulting selection.

At step 1407, the first device 130 transmits the route strategy that was selected to the server 125. The data may be transmitted using the communication device 205.

At step 1409, the first device 130 receives a route from the server 125 with at least a first destination. The route may also include additional destinations such as a second destination from the second device 131, and a third destination from a third device. The route may be displayed using the output interface 211. The first device 130 may use the positional circuitry 207 and the output interface 211 to show the present location of the first device 130 along the route.

At step 1411, the first device 130 receives an estimated time of arrival to the first destination. The ETA may be displayed on the first device 130 using the output interface 211. Using the positional circuitry 207, the controller 200, and the output interface 211, the first device may update the ETA as the first device 130 moves along the route. The first device 130 may also refresh the ETA by transmitting its present location to the server 125 using the communication interface 205 and receiving an updated ETA.

At step 1413, the first device 130 receives an alternative route from the server 125. This may be due to traffic conditions, additional passengers (and destinations), or any other incidents. The alternative route may be of a lower cost in any combination of time, distance, or fare. The first device 130 receives the alternative route through the communication interface 205 and may display the alternative route using the output interface 211. The alternative route may be stored in the memory 204 of the first device.

At step 1415, the first device 130 accepts the alternative route and updates a route acceptance indicator. This may be done using the input device 203 and controller 200 operating on data received previously and stored in memory 204. The output interface 211 may display the alternative route and the resulting selection.

At step 1417, the first device 130 transmits data including the acceptance to the server 125 including the route acceptance indicator. The data may be transmitted using the communication device 205.

At step 1419, the first device 130 receives an updated ETA from the server 125. The updated ETA may be displayed on the first device 130 using the output interface 211.

The term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored. These examples may be collectively referred to as a non-transitory computer readable medium.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or is operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims are intended to define the scope of the invention. The claims should not be read as limited to the described order or elements unless stated to that effect. Therefore, all embodiments that come within the scope of the following claims are claimed as the invention.

## Claims

1. A computer-implemented method comprising:
receiving (S201), from a first device, a first destination (A) of a first passenger and a first route strategy including a first rider destination hierarchy for a ride sharing algorithm, wherein a rider destination hierarchy is a rule that dictates how multiple destinations of multiple passengers received from multiple devices are to be ordered along a generated route;
receiving (S203), from a second device, a second destination (B) of a second passenger and a second route strategy including a second rider destination hierarchy for the ride sharing algorithm, wherein the second destination is different from the first destination and the second route strategy is different from the first route strategy; and
generating (S025), using the ride sharing algorithm, a route to the first destination and the second destination, wherein the route is based on the first rider destination hierarchy, the second rider destination hierarchy or a combination thereof.

2. The method of claim 1, further comprising:
calculating (S207) a first estimated time of arrival for the first destination (A);
calculating (S207) a second estimated time of arrival for the second destination (B);
transmitting (S209) the first estimated time of arrival to the first device; and
transmitting (S209) the second estimated time of arrival to the second device.

3. The method of claim 2, further comprising
receiving traffic data;
calculating a first updated estimated time of arrival for the first destination (A) based on the traffic data;
calculating a second updated estimated time of arrival for the second destination (B) based on the traffic data;
transmitting the first updated estimated time of arrival to the first device; and transmitting the second updated estimated time of arrival to the second device.

4. The method of claim 1, further comprising
receiving traffic data, wherein the route is generated taking into account the traffic data.

5. The method of claim 1, wherein the first rider destination hierarchy of the first route strategy specifies one or more of:
a last in first out (LIFO) strategy (320) in which the order of the order of the destinations along the route is the reverse of the order in which the destinations were received;
a first in first out (FIFO) strategy (420) in which the order of the destinations along the route is the same as the order in which the destinations were received;
a cooperative strategy (520) that generates the most time- of distance-efficient route to the multiple destinations; a prioritized routing strategy (620) which assigns a priority to each of the multiple destinations and generates a route based on these priorities;
a single direction strategy in which each of the multiple destinations must be along a previously generated route to the first destination;
a known destination strategy; and
that the route prioritizes the first destination (A) over the second destination (B).

6. The method of claim 1, further comprising:
receiving, from a third device, a third destination (C) of a third passenger and a third route strategy including a third rider destination hierarchy for the ride sharing algorithm; and
generating, using the ride sharing algorithm, a new route to the first destination (A), the second destination (B), and the third destination (C), wherein the new route is based on the rider destination hierarchies specified by the first, second, or third route strategies, or a combination thereof.

7. The method of claim 6, wherein the third rider destination hierarchy of the third route strategy specifies that the new route prioritizes the third destination (C) over the second destination (B) and the second destination over the first destination (A).

8. The method of claim 6, further comprising:
receiving traffic data;
generating, using the ride sharing algorithm, one or more alternative routes to the first destination (A), the second destination (B) and the third destination (C), wherein the one or more alternative routes takes into account the traffic data and is based on the rider destination hierarchies specified by the first, second, or third route strategies, or a combination thereof;
transmitting the one or more alternative routes to the first device, second device, and third device as potential replacement routes for the generated route or the generated new route;
receiving one or more acceptances or one or more rejections of the one or more alternative routes from the first device, the second device, or the third device; and
selecting an approved alternative route from the one or more alternative routes based on the one or more acceptances or one or more rejections, and the rider destination hierarchies specified by the first, second, or third route strategy, or combination thereof.

9. The method of claim 6, further comprising:
calculating a first estimated time of arrival for the first destination (A);
calculating a second estimated time of arrival for the second destination (B);
calculating a third estimated time of arrival for the third destination (C);
transmitting the first estimated time of arrival to the first device;
transmitting the second estimated time of arrival to the second device; and
transmitting the third estimated time of arrival to the third device.

10. The method of claim 8, wherein selecting an approved alternative route comprises:
counting the one or more acceptances for the one or more alternative routes; and
selecting the alternative route which has the highest number of acceptances.

11. The method of claim 1, further comprising:
generating a first route to the first destination (A) prior to receiving the second destination (B).

12. The method of claim 1, further comprising:
receiving a third destination (C) of a third passenger and a third route strategy from a third device, wherein the third destination is different from the first and second destinations and the third route strategy is different than the first or second route strategies;
receiving an approval of the third route strategy from the first device and the second device; and
generating a new route to the first destination (A), the second destination (B), and the third destination (C), wherein the new route is generated following the third rider destination hierarchy in the third route strategy.

13. A computer program configured to cause a processor of an apparatus to perform a method as claimed in any of claims 1-12.

14. An apparatus (123, 125) comprising:
at least one processor; and
at least one memory including computer program code for one or more programs; the at least one memory and the computer program code configured to, with the at least one processor, cause the apparatus to at least perform:
receiving (S201), from a first device, a first destination (A) of a first passenger and a first route strategy including a first rider destination hierarchy for a ride sharing algorithm, wherein a rider destination hierarchy is a rule that dictates how multiple destinations of multiple passengers received from multiple devices are to be ordered along a generated route;
receiving (S203), from a second device, a second destination (B) of a second passenger and a second route strategy including a second rider destination hierarchy for the ride sharing algorithm, wherein the second destination is different from the first destination and the second route strategy is different from the first route strategy; and
generating (S205), using the ride sharing algorithm, a route to the first destination and the second destination, wherein the route is based on the first rider destination hierarchy, the second rider destination hierarchy, or a combination thereof.

15. The apparatus of Claim 14, wherein the at least one memory and the computer program code are further configured to, with the at least one processor, cause the processor to perform a method as claimed in any of Claims 2-12.

## Patentansprüche

1. Computerimplementiertes Verfahren, Folgendes umfassend:
Empfangen (S201) eines ersten Ziels (A) eines ersten Insassen und einer ersten Routenstrategie, die eine erste Fahrerzielhierarchie für einen Mitfahralgorithmus beinhaltet, von einer ersten Vorrichtung, wobei eine Fahrerzielhierarchie eine Regel ist, die vorschreibt, wie mehrere Ziele von mehreren Insassen, die von mehreren Vorrichtungen empfangen werden, entlang einer erzeugten Route angeordnet werden sollen;
Empfangen (S203) eines zweiten Ziels (B) eines zweiten Insassen und einer zweiten Routenstrategie, die eine zweite Fahrerzielhierarchie für den Mitfahralgorithmus beinhaltet, von einer zweiten Vorrichtung, wobei sich das zweite Ziel von dem ersten Ziel unterscheidet und sich die zweite Routenstrategie von der ersten Routenstrategie unterscheidet; und
Erzeugen (S025) einer Route zu dem ersten Ziel und dem zweiten Ziel unter Verwendung des Mitfahralgorithmus, wobei die Route auf der ersten Fahrerzielhierarchie, der zweiten Fahrerzielhierarchie oder einer Kombination davon basiert.

2. Verfahren nach Anspruch 1, ferner Folgendes umfassend:
Berechnen (S207) einer ersten geschätzten Ankunftszeit für das erste Ziel (A);
Berechnen (S207) einer zweiten geschätzten Ankunftszeit für das zweite Ziel (B);
Übertragen (S209) der ersten geschätzten Ankunftszeit an die erste Vorrichtung; und
Übertragen (S209) der zweiten geschätzten Ankunftszeit an die zweite Vorrichtung.

3. Verfahren nach Anspruch 2, ferner Folgendes umfassend: Empfangen von Verkehrsdaten;
Berechnen basierend auf den Verkehrsdaten einer ersten aktualisierten geschätzten Ankunftszeit für das erste Ziel (A);
Berechnen basierend auf den Verkehrsdaten einer zweiten aktualisierten geschätzten Ankunftszeit für das zweite Ziel (B);
Übertragen der ersten aktualisierten geschätzten Ankunftszeit an die erste Vorrichtung; und
Übertragen der zweiten aktualisierten geschätzten Ankunftszeit an die zweite Vorrichtung.

4. Verfahren nach Anspruch 1, ferner umfassend das Empfangen von Verkehrsdaten, wobei die Route unter Berücksichtigung der Verkehrsdaten erzeugt wird.

5. Verfahren nach Anspruch 1, wobei die erste Fahrerzielhierarchie der ersten Routenstrategie Folgendes festlegt:
eine Last In - First Out(LIFO)-Strategie (320), bei der die Reihenfolge der Ziele entlang der Route die umgekehrte Reihenfolge der Reihenfolge ist, in der die Ziele empfangen wurden;
eine First In - First Out(FIFO)-Strategie (420), bei der die Reihenfolge der Ziele entlang der Route dieselbe Reihenfolge wie die Reihenfolge ist, in der die Ziele empfangen wurden;
eine kooperative Strategie (520), die die zeit- und entfernungseffizienteste Route zu den mehreren Zielen erzeugt;
eine priorisierte Routenstrategie (620), die jedem der mehreren Ziele eine Priorität zuweist und eine Route basierend auf diesen Prioritäten erzeugt;
eine Einzelrichtungsstrategie, bei der jedes der mehreren Ziele entlang einer zuvor erzeugten Route zu dem ersten Ziel sein muss;
eine bekannte Zielstrategie; und/oder
dass die Route das erste Ziel (A) gegenüber dem zweiten Ziel (B) priorisiert.

6. Verfahren nach Anspruch 1, ferner Folgendes umfassend:
Empfangen eines dritten Ziels (C) eines dritten Insassen und einer dritten Routenstrategie, die eine dritte Fahrerzielhierarchie für den Mitfahralgorithmus beinhaltet, von einer dritten Vorrichtung; und
Erzeugen einer neuen Route zu dem ersten Ziel (A), dem zweiten Ziel (B) und dem dritten Ziel (C) unter Verwendung des Mitfahralgorithmus, wobei die neue Route auf den durch die erste, die zweite oder die dritte Routenstrategie festgelegten Fahrerzielhierarchien oder einer Kombination davon basiert.

7. Verfahren nach Anspruch 6, wobei die dritte Fahrerzielhierarchie der dritten Routenstrategie festlegt, dass die neue Route das dritte Ziel (C) gegenüber dem zweiten Ziel (B) und das zweite Ziel gegenüber dem ersten Ziel (A) priorisiert.

8. Verfahren nach Anspruch 6, ferner Folgendes umfassend:
Empfangen von Verkehrsdaten;
Erzeugen einer oder mehrerer alternativer Routen zu dem ersten Ziel (A), dem zweiten Ziel (B) und dem dritten Ziel (C) unter Verwendung des Mitfahralgorithmus, wobei die eine oder die mehreren alternativen Routen die Verkehrsdaten berücksichtigen und auf den durch die erste, die zweite oder die dritte Routenstrategie festgelegten Fahrerzielhierarchien oder einer Kombination davon basiert;
Übertragen der einen oder der mehreren alternativen Routen an die erste Vorrichtung, die zweite Vorrichtung und die dritte Vorrichtung als mögliche Ersatzrouten für die erzeugte Route oder die erzeugte neue Route;
Empfangen einer oder mehrerer Akzeptierungen oder einer oder mehrerer Ablehnungen der einen oder mehreren alternativen Routen von der ersten Vorrichtung, der zweiten Vorrichtung oder der dritten Vorrichtung; und
Auswählen einer genehmigten alternativen Route aus der einen oder den mehreren alternativen Routen basierend auf der einen oder den mehreren Akzeptierungen oder der einen oder den mehreren Ablehnungen und den durch die erste, die zweite oder die dritte Routenstrategie festgelegten Fahrerzielhierarchien oder einer Kombination davon.

9. Verfahren nach Anspruch 6, ferner Folgendes umfassend:
Berechnen einer ersten geschätzten Ankunftszeit für das erste Ziel (A);
Berechnen einer zweiten geschätzten Ankunftszeit für das zweite Ziel (B);
Berechnen einer dritten geschätzten Ankunftszeit für das dritte Ziel (C);
Übertragen der ersten geschätzten Ankunftszeit an die erste Vorrichtung;
Übertragen der zweiten geschätzten Ankunftszeit an die zweite Vorrichtung; und
Übertragen der dritten geschätzten Ankunftszeit an die dritte Vorrichtung.

10. Verfahren nach Anspruch 8, wobei das Auswählen einer genehmigten alternativen Route Folgendes umfasst:
Zählen der einen oder der mehreren Akzeptierungen für die eine oder die mehreren alternativen Routen; und Auswählen der alternativen Route, die die höchste Anzahl von Akzeptierungen aufweist.

11. Verfahren nach Anspruch 1, ferner Folgendes umfassend:
Erzeugen einer ersten Route zu dem ersten Ziel (A) vor dem Empfangen des zweiten Ziels (B).

12. Verfahren nach Anspruch 1, ferner Folgendes umfassend:
Empfangen eines dritten Ziels (C) eines dritten Insassen und einer dritten Routenstrategie von einer dritten Vorrichtung, wobei sich das dritte Ziel von dem ersten und dem zweiten Ziel unterscheidet und sich die dritte Routenstrategie von der ersten oder der zweiten Routenstrategie unterscheidet;
Empfangen einer Genehmigung der dritten Routenstrategie von der ersten Vorrichtung und der zweiten Vorrichtung; und
Erzeugen einer neuen Route zu dem ersten Ziel (A), dem zweiten Ziel (B) und dem dritten Ziel (C), wobei die neue Route gemäß der dritten Fahrerzielhierarchie in der dritten Routenstrategie erzeugt wird.

13. Computerprogramm, das konfiguriert ist, einen Prozessor einer Einrichtung zu veranlassen, ein Verfahren nach einem der Ansprüche 1-12 durchzuführen.

14. Einrichtung (123, 125), Folgendes umfassend:
wenigstens einen Prozessor; und
wenigstens einen Speicher, der einen Computerprogrammcode für ein oder mehrere Programme beinhaltet;
wobei der wenigstens eine Speicher und der Computerprogrammcode konfiguriert sind, um mit dem wenigstens einen Prozessor die Einrichtung zu veranlassen, wenigstens Folgendes durchzuführen:
Empfangen (S201) eines ersten Ziels (A) eines ersten Insassen und einer ersten Routenstrategie, die eine erste Fahrerzielhierarchie für einen Mitfahralgorithmus beinhaltet, von einer ersten Vorrichtung, wobei eine Fahrerzielhierarchie eine Regel ist, die vorschreibt, wie mehrere Ziele von mehreren Insassen, die von mehreren Vorrichtungen empfangen werden, entlang einer erzeugten Route angeordnet werden sollen;
Empfangen (S203) eines zweiten Ziels (B) eines zweiten Insassen und einer zweiten Routenstrategie, die eine zweite Fahrerzielhierarchie für den Mitfahralgorithmus beinhaltet, von einer zweiten Vorrichtung, wobei sich das zweite Ziel von dem ersten Ziel unterscheidet und sich die zweite Routenstrategie von der ersten Routenstrategie unterscheidet; und
Erzeugen (S205) einer Route zu dem ersten Ziel und dem zweiten Ziel unter Verwendung des Mitfahralgorithmus, wobei die Route auf der ersten Fahrerzielhierarchie, der zweiten Fahrerzielhierarchie oder einer Kombination davon basiert.

15. Einrichtung nach Anspruch 14, wobei der wenigstens eine Speicher und der Computerprogrammcode ferner konfiguriert sind, um mit dem wenigstens einen Prozessor den Prozessor zu veranlassen, ein Verfahren nach einem der Ansprüche 2-12 durchzuführen.

## Revendications

1. Procédé mis en œuvre par ordinateur, consistant à :
recevoir (S201), à partir d'un premier dispositif, une première destination (A) d'un premier passager et une première stratégie d'itinéraire comprenant une première hiérarchie de destination de voyageur pour un algorithme de covoiturage, une hiérarchie de destination de voyageur étant une règle dictant comment plusieurs destinations de plusieurs passagers reçues de plusieurs dispositifs doivent être ordonnées le long d'un itinéraire généré ;
recevoir (S203), à partir d'un deuxième dispositif, une deuxième destination (B) d'un deuxième passager et une deuxième stratégie d'itinéraire comprenant une deuxième hiérarchie de destination de voyageur pour l'algorithme de covoiturage, la deuxième destination étant différente de la première destination et la deuxième stratégie d'itinéraire étant différente de la première stratégie d'itinéraire ; et
générer (S025), à l'aide de l'algorithme de covoiturage, un itinéraire vers la première destination et la deuxième destination, l'itinéraire étant basé sur la première hiérarchie de destination du premier voyageur, du deuxième voyageur, ou d'une combinaison de celles-ci.

2. Procédé selon la revendication 1, consistant en outre à :
calculer (S207) une première heure d'arrivée estimée pour la première destination (A) ;
calculer (S207) une deuxième heure d'arrivée estimée pour la deuxième destination (B) ;
transmettre (S209) la première heure d'arrivée estimée au premier dispositif ; et
transmettre (S209) la deuxième heure d'arrivée estimée au deuxième dispositif.

3. Procédé selon la revendication 2, consistant en outre à
recevoir des données de circulation ;
calculer une première heure d'arrivée estimée mise à jour pour la première destination (A) sur la base des données de circulation ;
calculer une deuxième heure d'arrivée estimée mise à jour pour la deuxième destination (B) sur la base des données de circulation ;
transmettre la première heure d'arrivée estimée mise à jour au premier dispositif ; et
transmettre la deuxième heure d'arrivée mise à jour au deuxième dispositif.

4. Procédé selon la revendication 1, consistant en outre à
recevoir des données de circulation, l'itinéraire étant généré en tenant compte des données de circulation.

5. Procédé selon la revendication 1, dans lequel la hiérarchie de destination du premier voyageur de la première stratégie d'itinéraire spécifie un ou plusieurs des facteurs suivants :
une stratégie de dernier entré premier sorti (LIFO) (320) dans laquelle l'ordre de l'ordre des destinations le long de l'itinéraire est l'inverse de l'ordre dans lequel les destinations ont été reçues ;
une stratégie première entré premier sorti (FIFO) (420) dans laquelle l'ordre des destinations le long de l'itinéraire est le même que l'ordre dans lequel les destinations ont été reçues ;
une stratégie coopérative (520) qui génère l'itinéraire le plus rapide en temps et en distance vers les destinations multiples ;
une stratégie d'itinéraire prioritaire (620) qui attribue une priorité à chacune des multiples destinations et génère un itinéraire sur la base de ces priorités ;
une stratégie à direction unique dans laquelle chacune des destinations multiples doit être le long d'un itinéraire précédemment généré vers la première destination ;
une stratégie de destination connue ; et
que l'itinéraire donne la priorité à la première destination (A) sur la deuxième destination (B).

6. Procédé selon la revendication 1, consistant en outre à :
recevoir, à partir d'un troisième dispositif, une troisième destination (C) d'un troisième passager et une troisième stratégie d'itinéraire comprenant une troisième hiérarchie de destination de voyageur pour l'algorithme de covoiturage ; et
générer, à l'aide de l'algorithme de covoiturage, un nouvel itinéraire vers la première destination (A), la deuxième destination (B) et la troisième destination (C), le nouvel itinéraire étant basé sur les hiérarchies de destination du voyageur spécifiées par le premier, deuxième ou troisième stratégies d'itinéraire, ou sur une combinaison de celles-ci.

7. Procédé selon la revendication 6, dans lequel la troisième hiérarchie de destination de voyageur de la troisième stratégie d'itinéraire spécifie que le nouvel itinéraire donne la priorité à la troisième destination (C) sur la deuxième destination (B) et à la deuxième destination sur la première destination (A).

8. Procédé selon la revendication 6, consistant en outre à :
recevoir des données de circulation ;
générer, à l'aide de l'algorithme de covoiturage, un ou plusieurs itinéraires alternatifs vers la première destination (A), la deuxième destination (B) et la troisième destination (C), le ou les itinéraires alternatifs prenant en compte les données de circulation et étant basés sur des hiérarchies de destination de voyageur spécifiées par les première, deuxième ou troisième stratégies d'itinéraire, ou sur une combinaison de celles-ci ;
transmettre le ou les itinéraires alternatifs au premier dispositif, au deuxième dispositif et au troisième dispositif en tant qu'itinéraires de remplacement potentiels pour l'itinéraire généré ou le nouvel itinéraire généré ;
recevoir une ou plusieurs acceptations ou un ou plusieurs rejets d'un ou plusieurs itinéraires alternatifs du premier dispositif, du deuxième dispositif ou du troisième dispositif ; et
sélectionner un itinéraire alternatif approuvé parmi un ou plusieurs itinéraires alternatifs sur la base d'une ou plusieurs acceptations ou d'un ou plusieurs rejets, et des hiérarchies de destination de voyageur spécifiées par la première, deuxième, ou troisième stratégie d'itinéraires, ou une combinaison de celles-ci.

9. Procédé selon la revendication 6, consistant en outre à :
calculer une première heure d'arrivée estimée pour la première destination (A) ;
calculer une deuxième heure d'arrivée estimée pour la deuxième destination (B) ;
calculer une troisième heure d'arrivée estimée pour la troisième destination (C) ;
transmettre la première heure d'arrivée estimée au premier dispositif ;
transmettre la deuxième heure d'arrivée estimée au deuxième dispositif ; et
transmettre la troisième heure d'arrivée estimée au troisième dispositif.

10. Procédé selon la revendication 8, dans lequel la sélection d'un itinéraire approuvé consiste à :
compter la ou les acceptations pour le ou les itinéraires alternatifs ; et
sélectionner l'itinéraire alternatif qui a le plus grand nombre d'acceptations.

11. Procédé selon la revendication 1, consistant en outre à :
générer un premier itinéraire vers la première destination (A) avant de recevoir la deuxième destination (B).

12. Procédé selon la revendication 1, consistant en outre à :
recevoir une troisième destination (C) d'un troisième passager et une troisième stratégie d'itinéraire d'un troisième dispositif, la troisième destination étant différente des première et deuxième destinations et la troisième stratégie d'itinéraire étant différente des première ou deuxième stratégies d'itinéraire ;
recevoir une approbation de la troisième stratégie d'itinéraire du premier dispositif et du deuxième dispositif ; et
générer un nouvel itinéraire vers la première destination (A), la deuxième destination (B) et la troisième destination (C), le nouvel itinéraire étant généré suivant la hiérarchie de destination du troisième voyageur dans la troisième stratégie d'itinéraire.

13. Programme informatique configuré pour amener un processeur d'un appareil à exécuter un procédé selon l'une quelconque des revendications 1 à 12.

14. Appareil (123, 125) comprenant :
au moins un processeur ; et
au moins une mémoire comportant un code de programme informatique pour un ou
plusieurs programmes ; l'au moins une mémoire et le code de programme informatique étant configurés pour, à l'aide de l'au moins un processeur, amener l'appareil à effectuer au moins ce qui suit :
recevoir (S201), à partir d'un premier dispositif, une première destination (A) d'un premier passager et une première stratégie d'itinéraire comprenant une première hiérarchie de destination de voyageur pour un algorithme de covoiturage, une hiérarchie de destination de voyageur étant une règle dictant comment plusieurs destinations de plusieurs passagers reçues de plusieurs dispositifs doivent être ordonnées le long d'un itinéraire généré ;
recevoir (S203), à partir d'un deuxième dispositif, une deuxième destination (B) d'un deuxième passager et une deuxième stratégie d'itinéraire comprenant une deuxième hiérarchie de destination de voyageur pour l'algorithme de covoiturage, la deuxième destination étant différente de la première destination et la deuxième stratégie d'itinéraire étant différente de la première stratégie d'itinéraire ; et
générer (S205), à l'aide de l'algorithme de covoiturage, un itinéraire vers la première destination et la deuxième destination, l'itinéraire étant basé sur la hiérarchie de destination du premier voyageur, sur la hiérarchie de destination du deuxième voyageur, ou sur une combinaison de celles-ci.

15. Appareil selon la revendication 14, dans lequel l'au moins une mémoire et le code de programme d'ordinateur sont en outre configurés pour, avec l'au moins un processeur, amener le processeur à exécuter un procédé selon l'une quelconque des revendications 2 à 12.
